# EUROPEAN PATENT APPLICATION

(11) **EP 4 814 948 A1**
(43) Date of publication of application: **30.09.2026**
(21) Application number: 25167093.1
(22) Date of filing: 28.03.2025
(51) Int. Cl.: G10L 13/027, G10L 15/26, H04M 11/08, G10L 19/018

(54) **COMPUTER SYSTEM AND METHOD OF OPERATING THE SAME**

(71) Applicant: British Telecommunications Public Limited Company, London E1 8EE (GB)
(72) Inventor: FREE, Michael, London, E1 8EE (GB); CLAXTON, Robert, London, E1 8EE (GB); GOLAID, Mohamed, London, E1 8EE (GB)
(74) Representative: British Telecommunications public limited company Intellectual Property Department

(57) **Abstract**

A method (300) for operating a computer system (100), said computer system comprising a: first Audio Communication Machine (110-1), ACM; and second ACM (110-2) that is communicatively connected to the second ACM via a telecommunications network (120) over a first communication link (130); and wherein the first ACM and the second ACM each respectively comprise a first and a second: Machine Natural Language Text Generator (240), MNLTG; audio processor (210), including a: Machine Speech-to-Text Processor (260), MStTP, for converting speech into text; Machine Text-to-Speech Synthesiser (270), MTtSS, for converting text generated by the MNLTG into speech; and Identifier Generator (230), IG, for generating an identifier, ID, denoting machinegenerated communications; and wherein the method comprises the steps of: generating, at the first ACM (310): an ID, using the first IG; first text, using the first MNLTG; first speech, from said generated first text and using the first MTtSS; and audio data comprising the generated first speech and the ID; communicating (310), from the first ACM to the second ACM, via the first communication link, the generated audio data; receiving (320), at the second ACM, the communicated audio data; identifying, using the second audio processor, the ID within the communicated audio data; and in response to the second ACM identifying the ID, the second ACM communicating, to the first ACM, a textual response, generated by the second MNLTG, to the first speech (330-1). Corresponding methods of operating the first ACM and the second ACM are also provided. A computer system, first ACM and a second ACM are also provided.

## Description

### Field of Invention

The present invention relates to a computer system, and to constituent Audio Communication Machines, and to methods of operating the same, and in particular for identifying human-mimicking machine-to-machine communication, and for responsively reconfiguring such communication.

### Background

Artificial Intelligence (Al) systems can reasonably mimic human communication by generating, and responding to, text and/or speech. Such systems may be referred to as, or form a part of, Natural Language Processing (NLP) systems, Generative Al (or "Gen-Al"), Al communication tools, conversational Al. Such conversational Als can incorporate numerous components, such as Large Language Models (LLMs), speech synthesis systems and processing, and reasoning engines.

Conversational Als may be used wherever there is written or spoken human communication, including in customer call centres by providing customer-supporting conversational Al agents to help improve capacity for supporting customers.

However, the effective communicative capabilities of conversational Al may raise concerns about discerning whether a counterparty to a conversation is a human or a conversational Al, and in particular whether there is human-Al or Al-Al (or, more broadly, machine-to-machine) interaction.

It is an aim of the present invention to alleviate at least some of the aforementioned problems.

### Statements of Invention

According to a first aspect of the present invention, there is provided: a method for operating a computer system, said computer system comprising a: first Audio Communication Machine, ACM; and second ACM that is communicatively connected to the second ACM via a telecommunications network over a first communication link; and wherein the first ACM and the second ACM each respectively comprise a first and a second: Machine Natural Language Text Generator, MNLTG; audio processor, including a: Machine Speech-to-Text Processor, MStTP, for converting speech into text; Machine Text-to-Speech Synthesiser, MTtSS, for converting text generated by the MNLTG into speech; and Identifier Generator, IG, for generating an identifier, ID, denoting machine-generated communications; and wherein the method comprises the steps of: generating, at the first ACM: an ID, using the first IG; first text, using the first MNLTG; first speech, from said generated first text and using the first MTtSS; and audio data comprising the generated first speech and the ID; communicating, from the first ACM to the second ACM, via the first communication link, the generated audio data; receiving, at the second ACM, the communicated audio data; identifying, using the second audio processor, the ID within the communicated audio data; and in response to the second ACM identifying the ID, the second ACM communicating, to the first ACM, a textual response, generated by the second MNLTG, to the first speech.

Optionally, the second ACM is configured to retrieve the first text by processing of the received audio data, and specifically the first speech, by the MStTP. Optionally, the generated first text and/or the textual response is human-readable (i.e. human intelligible and/or natural language) and/or machine-readable (i.e. machine code or language, and/or a machine configuration, such as a machine learning model version, weightings, and/or seed). Optionally, the textual response is a direct response to the first text, or the textual response is a prompt for an LLM from which subsequently to generate said direct response (and optionally a configuration for the LLM) by means of, for example, the first MNLTG.

According to another aspect of the invention, there is provided a method of operating a first Audio Communication Machine, ACM, for communicating with a second ACM, in which said ACMs are communicatively connected via a telecommunications network over a first communication link, wherein the first ACM comprises a first: Machine Natural Language Text Generator, MNLTG; audio processor, including a first: Machine Speech-to-Text Processor, MStTP, for converting speech into text; Machine Text-to-Speech Synthesiser, MTtSS, for converting text generated by the MNLTG into speech; and Identifier Generator, IG, for generating an identifier, ID, denoting machine-generated communications; and wherein the method comprises the steps of: generating, at the first ACM: an ID, using the first IG; first text, using the first MNLTG; first speech, from said generated first text and using the first MTtSS; and audio data comprising the generated first speech and the ID; communicating, from the first ACM to the second ACM, via the first communication link, the generated audio data thereby to permit the second ACM, in response to receiving the audio data, to identify the ID within the communicated audio data and, in response to the second ACM identifying the ID, to communicate, to the first ACM, a textual response to the first speech.

According to another aspect of the invention, there is provided a method of operating a second Audio Communication Machine, ACM, for communicating with a first ACM, in which said ACMs are communicatively connected via a telecommunications network over a first communication link, wherein the second ACM comprises a second: Machine Natural Language Text Generator, MNLTG; audio processor, including a second: Machine Speech-to-Text Processor, MStTP, for converting speech into text; and Machine Text-to-Speech Synthesiser, MTtSS, for converting text generated by the MNLTG into speech; wherein the method comprises the steps of: receiving, at the second ACM, from the first ACM, via the first communication link, audio data comprising first speech generated by the first ACM based on first text generated by the first ACM, and an ID for denoting machine-generated communications; identifying, using the second audio processor, the ID within the communicated audio data; and in response to identifying the ID, communicating, to the first ACM, a textual response, generated by the second MNLTG, to the first speech.

Preferably, the textual response is communicated from the second ACM to the first ACM via the first communication link or via a second communication link that is different to the first communication link. Optionally, the second communication link is requested, instructed, configured, and/or established by the first or second ACM, which may be performed via the textual response and/or via an audio response from the second ACM, as communicated over the first communication link. Preferably, the first ACM responds to the textual response using a corresponding textual response. Preferably, the corresponding textual response is communicated via the first and/or second communication link. Optionally, the first and second communication links are provided over a different: data session; data tunnel, network (e.g. as to type, such as cellular or fixed-access); and/or network provider. Optionally, the ID is configured to encode the network configuration for the second communication link, and wherein said network configuration may comprise a network address (e.g. IP address, port number, MAC address, URL), data and/or transport protocol, encryption keys, and/or access credentials.

Preferably, the ID is configured to encode: the first text; a configuration from which the first text is generated by the first ACM; and/or a network address to a network location storing: the first text; and/or said configuration; and further comprising the step of the first ACM generating the textual response from the first text as retrieved, and/or as generated, using the ID. Optionally, the configuration is for the first MNLTG, and may include a prompt and parameters for a machine learning neural network model, such as model type and/or version, weights, seed, vectors, training data, temperature, etc. Preferably, the network location is remote to the first ACM and/or the second ACM.

Preferably, the method *(i.e.* any, or all, of the aforementioned) further comprises the step of, in response to the second ACM identifying the ID, the second ACM preventing generation and/or communication by the second ACM of an audio response to the received first speech. Preferably, preventing generation and/or communication of the audio response comprises preventing operation of the second MStTP from using the received first speech, the second MNLTG from using the first text and/or the second MTtSS from generating speech from the textual response. Optionally, the method further comprises the step of, in response to the second ACM identifying the ID, ceasing ongoing communication with the first ACM using audio data (and/or using the first communication link). Accordingly, ongoing communication between the first and second ACMs may be performed by using (only) textual responses, and not audio responses. Optionally, the method may further comprise the step of maintaining ongoing audio communication (optionally, solely via the first and/or second communication link) in parallel to textual responses (optionally, solely via the first or second communication link that is not used for audio communication), wherein such may be performed in response to detecting a presence of at least one participating human user. Optionally, the method further comprises the steps of: generating, using the second MTtSS, second speech using the textual response; and communicating the second speech to the first ACM within second audio data. Optionally, the second audio data comprises a further ID, generated by the second IG, for denoting that the second speech is machine generated, and wherein the further ID may encode corresponding data (e.g. the textual response, etc.) to that of the ID, and may subsequently be used by the first ACM in a corresponding manner to the second ACM using the received ID. Optionally, generating the second speech is performed in response to the second audio processor detecting an absence of the ID in the received first audio data.

Preferably, the method further comprises the step of, in response to the first ACM receiving the textual response from the second ACM, the first ACM communicating a further textual response to the textual response from the second ACM. Preferably, the first ACM generates and/or communicates no audio response, and may only communicate said textual response.

According to another aspect of the invention there is provided a computer-readable carrier medium comprising a computer program, which, when the computer program is executed by a computer, causes the computer to carry out the steps of any one of the methods described above.

According to another aspect of the invention there is provided a computer system comprising a: first Audio Communication Machine, ACM; and second ACM that is communicatively connected to the second ACM via a telecommunications network over a first communication link; and wherein the first ACM and the second ACM each respectively comprise a first and a second: Machine Natural Language Text Generator, MNLTG; audio processor, including a: Machine Speech-to-Text Processor, MStTP, for converting speech into text; Machine Text-to-Speech Synthesiser, MTtSS, for converting text generated by the MNLTG into speech; and Identifier Generator, IG, for generating an identifier, ID, denoting machine-generated communications; and wherein the first ACM is configured to: generate: an ID, using the first IG; first text, using the first MNLTG; first speech, from said generated first text and using the first MTtSS; and audio data comprising the generated first speech and the ID; communicate, from the first ACM to the second ACM, via the first communication link, the generated audio data; and wherein the second ACM is configured to: receive the communicated audio data; identify, using the second audio processor, the ID within the communicated audio data; and in response to the second ACM identifying the ID, communicate, to the first ACM, a textual response, generated by the second MNLTG, to the first speech.

According to another aspect of the invention there is provided a first Audio Communication Machine, ACM, for communicating with a second ACM, in which said ACMs are communicatively connected via a telecommunications network over a first communication link, wherein the first ACM comprises a first: Machine Natural Language Text Generator, MNLTG; audio processor, including a first: Machine Speech-to-Text Processor, MStTP, for converting speech into text; Machine Text-to-Speech Synthesiser, MTtSS, for converting text generated by the MNLTG into speech; and Identifier Generator, IG, for generating an identifier, ID, denoting machine-generated communications; and wherein the first ACM is configured to: generate: an ID, using the first IG; first text, using the first MNLTG; first speech, from said generated first text and using the first MTtSS; and audio data comprising the generated first speech and the ID; communicate, to the second ACM, via the first communication link, the generated audio data thereby to permit the second ACM, in response to receiving the audio data, to identify the ID within the communicated audio data and, in response to the second ACM identifying the ID, to communicate, to the first ACM, a textual response to the first speech.

According to another aspect of the invention there is provided a second Audio Communication Machine, ACM, for communicating with a first ACM, in which said ACMs are communicatively connected via a telecommunications network over a first communication link, wherein the second ACM comprises a second: Machine Natural Language Text Generator, MNLTG; audio processor, including a second: Machine Speech-to-Text Processor, MStTP, for converting speech into text; and Machine Text-to-Speech Synthesiser, MTtSS, for converting text generated by the MNLTG into speech; wherein the second ACM is configured to: receive, from the first ACM, via the first communication link, audio data comprising first speech generated by the first ACM based on first text generated by the first ACM, and an ID for denoting machine-generated communications; identify, using the second audio processor, the ID within the communicated audio data; and in response to identifying the ID, communicate, to the first ACM, a textual response, generated by the second MNLTG, to the first speech.

Preferably, each MNLTG, MTtSS and/or MStTP is/are configured to generate text using machine learning or artificial intelligence. Preferably, each MNLTG comprises, or utilises, a large language model, deep learning, deep neural network, symbolic natural language processor, statistical natural language processor, rule-based natural language processor, translation engine, and/or a reasoning engine. Preferably, the MTtSS is configured to utilise, concatenation, diphone, domain-specific, formant, articulatory, HMM-based or statistical parametric, sinewave-based or parametric, and/or deep learning-based synthesis. Optionally, the first and/or second ACM/s is/are provided as part of a call centre or chat system for a customer service centre. Optionally, the first audio data (and/or the second audio data) and/or the textual response/s are communicated using a/an: data session; IP session; data stream; push message; MMS; email; WebRTC; Extensible Messaging and Presence Protocol (XMPP). Optionally, the textual response/s is/are communicated using a/an: SMS; Uniform Resource Locator (URL); Hypertext Transfer Protocol (HTTP); File Transfer Protocol (FTP); Internet Relay Chat (IRC); and/or WHOIS query. Optionally, the first and/or second communication link/s utilise a/an: Public Switched Telephone Network (PSTN); Voice over Internet Protocol (VoIP); and/or Integrated Services Digital Network (ISDN). Optionally, the first audio data forms a part of video data. Optionally, the textual response consists solely of text, and absent sound and images. Optionally, the telecommunications network is in the form of, or comprises, a fixed-access telecommunications network (e.g. a copper- and/or fibre-optic based network); and/or wireless wide area network, such as a cellular (e.g. 3G, 4G, 5G, etc.) network, satellite network or HetNet; and/or a wireless local area network, such as a Wi-Fi or Bluetooth network. Preferably, the second audio processor is configured to detect the ID. Each of the first and/or second audio processors may comprise a respective ID detector. Optionally, the ID is an audio watermark or comprises a data flag (e.g. within an audio data protocol, such as Session Initiation Protocol or Session Description Protocol). Preferably, the audio watermark is inaudible and/or unintelligible to a human user. Optionally, the audio watermark utilises: imperceptible frequency insertion; echo-based watermark: spread spectrum watermarking; or least significant bit modification.

The above summary is not intended to describe each illustrated embodiment or every implementation of the subject matter hereof. The invention includes any novel aspects described and/or illustrated herein. The invention also extends to methods and/or apparatus substantially as herein described and/or as illustrated with reference to the accompanying drawings. The invention is also provided as a computer program and/or a computer program product for carrying out any of the methods described herein and/or for embodying any of the apparatus features described herein, and a computer-readable medium storing thereon a program for carrying out any of the methods and/or for embodying any of the apparatus features described herein. Features described as being implemented in hardware may alternatively be implemented in software, and vice versa.

It should be understood that the individual operations used in the methods of the present teachings may be performed in any order and/or simultaneously, as long as the teaching remains operable. Furthermore, it should be understood that the apparatus and methods of the present teachings can include any number, or all, of the described embodiments, as long as the teaching remains operable.

Any apparatus feature may also be provided as a corresponding step of a method, and vice versa. As used herein, means plus function features may alternatively be expressed in terms of their corresponding structure, for example as a suitably-programmed processor.

Any feature in one aspect of the invention may be applied, in any appropriate combination, to other aspects of the invention. Any, some and/or all features in one aspect can be applied to any, some and/or all features in any other aspect, in any appropriate combination. Particular combinations of the various features described and defined in any aspects of the invention can be implemented and/or supplied and/or used independently.

As used throughout, the word 'or' can be interpreted in the exclusive and/or inclusive sense, unless otherwise specified.

The invention extends to a computer system, Audio Communication Machine, and methods of operating said computer system and Audio Communication Machine, as described herein and/or substantially as illustrated with reference to the accompanying drawings. The present invention is now described, purely by way of example, with reference to the accompanying diagrammatic drawings, in which:
Figure 1 shows a computer system for a pair of intercommunicating Audio Communication Machines, ACMs;
Figure 2 shows one of the pair of ACMs in detail; and
Figure 3 shows a process of operating the computer system.

While various embodiments are amenable to various modifications and alternative forms, specifics thereof have been shown by way of example in the drawings and will be described in detail. It should be understood, however, that the intention is not to limit the claimed inventions to the particular embodiments described. On the contrary, the intention is to cover all modifications, equivalents, and alternatives falling within the spirit and scope of the subject matter as defined by, at least, the claims.

### Specific Description

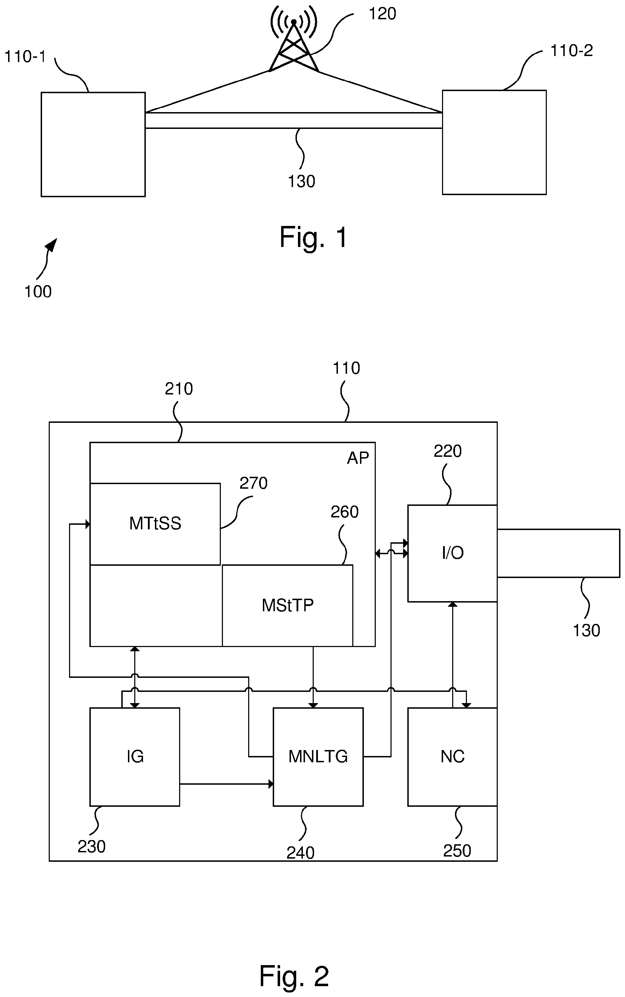

Figure 1 shows a computer system 100 comprising a/an: first Audio Communication Machine 110-1, ACM; second ACM 110-2; and telecommunications network 120.

The telecommunications network 120 is configured communicatively to connect the first ACM 110-1 and the second ACM 110-2 so as to enable bi-directional text and audio communication therebetween. For example, the telecommunications network 120 is in the form of a wireless and/or wired (or fixed-access) wide area telecommunications network, such as a cellular (e.g. based on 3G, 4G and/or 5G standards), satellite, HetNet, copper, and/or fibre optic network. The telecommunications network is also available to comprise or utilise the Internet and/or a wireless or wired local area network, such as a Wi-Fi or a Bluetooth network.

To interconnect the first 110-1 and second 110-2 ACMs, the telecommunications network 120 is configured to provide a communication link 130 therebetween, which is available to support audio (*e.g.* via VoIP, VoLTE, PSTN, *etc*.) and text communication (*e.g.* via WebRTC, SMS, email, *etc*.)

Each of the first 110-1 and second 110-2 ACMs (collectively or generically the ACM/s 110) are computer-implemented human communication systems for mimicking human voice and written communication, such as a conversational Al system. In a specific example, the ACMs 110 comprise, or interface with (via an API), conversational Al capabilities from Alexa from Amazon, Google Assistant from Google, Siri from Apple, and/or ChatGPT from OpenAl.

As such, and as best shown in Figure 2, each of the ACMs 110 comprise a/an: Audio Processor 210 (AP); network Input/Output 220 (I/O); Identifier Generator 230 (IG); Machine Natural Language Text Generator 240 (MNLTG); and Network Controller 250 (NC).

In turn, the AP 210 comprises a: Machine Speech-to-Text Processor 260 (MStTP); and Machine Text-to-Speech Synthesiser 270 (MTtSS).

The MStTP 260 is configured to convert speech, as received by the AP 210 from the I/O 220 (*e.g.* from a counterparty ACM), into text (human- and/or machine-readable). The text is then output by the MStTP 260 to the MNLTG 240. For example, the MStTP 260 utilises audio streaming or chunking techniques, and audio embedding, diarisation or speech transcription models.

Conversely, the MTtSS 270 is configured to covert text (machine- and/or human-readable), as received from, and generated by, the MNLTG 240, to human speech. For example, the MTtSS 270 utilises a mel-frequency spectrogram and a neural vocoder (*e.g*. HiFi-GAN, as disclosed in *"HiFi-GAN: Generative Adversarial Networks for Efficient and High Fidelity Speech Synthesis",* Kong *et al,* arXiv:2010.05646), and may further utilise a Generative Adversarial Network (GAN).

The AP 210 is configured to generate audio comprising the speech generated by the MTtSS 270 and an Identifier (ID), generated by the IG 230, for indicating machine-generated communications (as described in more detail below), and then to output said audio to the I/O 220 for onward communication (e.g. to a counterparty ACM). In addition, the AP is configured to receive, from the I/O, audio and to process such inbound audio to identify an ID for indicating machine-generated communications.

The MNLTG 240 is configured to generate text (machine- and/or human-readable) for, and as a part of a, human conversation.

The MNLTG 240, MTtSS 270 and MStTP 260 are available to be configured using rule-based systems, statistical models, and/or machine-learning techniques such as based on neural networks and Large Language Models, as appropriate.

The I/O 220 is a network interface for communicating with the telecommunications network 120. For example, the I/O comprises a cellular chipset and/or a network cable port, such as an Ethernet cable.

The NC 250 is configured to establish and configure a network connection with the telecommunications network 120, and thus also with a counterparty ACM 110. For example, the NC comprises a network adaptor.

The IG 230 is a processor for generating the ID, in which the ID is for communicating to the ACMs 110 that natural language communication from the ACM is machine-generated (as opposed to human-generated). That is, the ID is effectively metadata about, at least, machine provenance of the speech. In a specific example, the ID is a watermark, and more specifically an audio watermark, which is embedded as audio data within an audio stream comprising speech, in which the audio watermark is faint, imperceptible and/or unintelligible to a human user. It will be appreciated that there are numerous techniques for generating such an audio watermark, including, for example, imperceptible frequency insertion, echo-based watermark, spread spectrum watermarking, or least significant bit modification techniques. In an alternative, the ID is embedded within a Session Initiation Protocol (SIP) and/or Session Description Protocol (SDP) as a flag or invite.

Regardless of the form of the ID, the ID is additionally available to encode a/an:
- instruction for an ACM 110;
- human- and/or machine-readable script from which the MTtSS 270 generates speech (and specifically text generated by the MNLTG);
- configuration used by the MNLTG 240 to generate the script for said speech, such as a prompt, parameters, model type and/or version, weights, seed, vectors, training data, temperature, *etc.;* and/or
- configuration for a communication link for the telecommunications network 130; and/or
- network address (*e.g.* an IP address, access credentials, and/or Uniform Resource Locator, URL) from which to retrieve the aforementioned instruction, transcription and/or configuration/s.

The IG 230 is communicatively coupled to the AP 210, such that the IG is configured to receive, from the AP an instruction to generate the ID, and to communicate the generated ID to the AP. In response to receiving the ID from the IG, the AP inserts the ID into audio data (*e.g.* as a watermark within the audio comprising the speech generated by the MTtSS).

In this example, the first ACM 110-1 and second ACM 110-2 are substantially identical. To differentiate between components of the first ACM and the second ACM, such components are accordingly pre-fixed and reference numerals are accordingly suffixed *(i.e.* such that the first IG 230-1 and the second IG 230-2 are the IGs 230 of the first 110-1 and second ACMs 110-2, respectively).

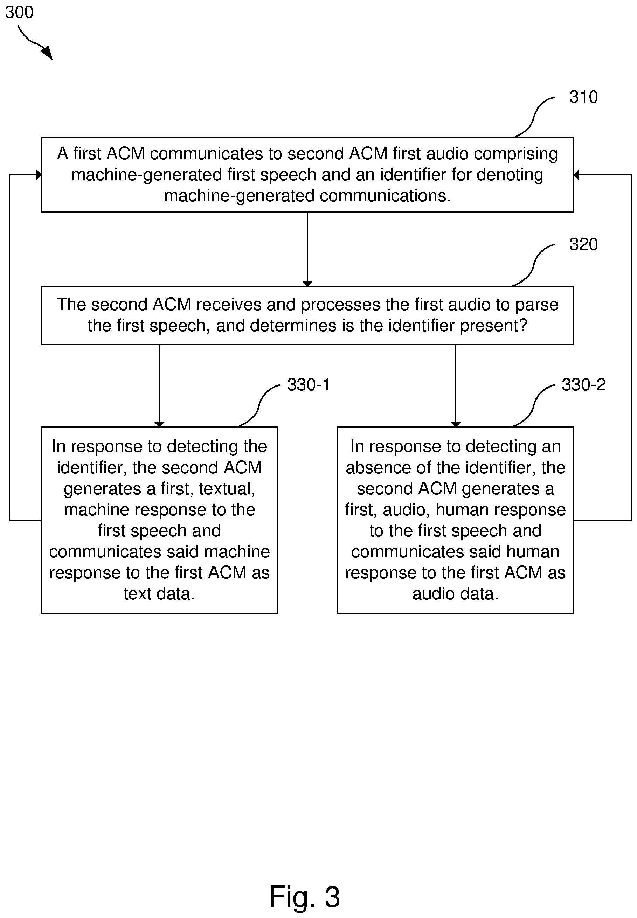

Figure 3 shows a process of operating the computer system 100.

To operate the process 300, one of the ACMs 110 initiates, by means of the respective NC and the telecommunications network, the communication link 130 with a counterparty ACM so as to enable audio communication therebetween. For example, the first ACM 110-1 calls the second ACM 110-2 using VoIP.

At a first step 310, upon establishing the communication link 130, the first ACM 110-1 generates and communicates, to the second ACM 110-2, first audio. The first audio comprises a first ID (generated by the first IG 230-1) and first speech (generated by the first MTtSS 270-1) based on first text (generated by the first MNLTG 240-1). In a specific example, the first audio comprises speech of a call salutation and a conversation initiator, such as a statement or question (*e.g. "Hello, please could you help me process a refund?*'). The first audio is then communicated from the first AP 210-1 to the first I/O 220-1, as audio data over the communication link 130, to the second ACM 110-2.

At a next step 320, the second ACM 110-2 (and specifically the second I/O 220-2 and second AP 210-2) receive the first audio via the communication link. The first audio is then processed by the first AP 210-1; to do so, the first audio is processed by the second IG 230-2 and the second MStTP 260-2.

Specifically, the second MStTP 260-2 processes the received first audio to identify the first speech, and to convert said speech into first received text (which ought - depending upon accuracy of the second MStTP 260-2 - to correspond with the first text, as generated by the first MNLTG 240-1). The first received text is then output from the second MStTP 260-2 and communicated to the second MNLTG 240-2.

Correspondingly, the second IG 230-2 processes the received first audio to identify whether the ID is present.

In a first outcome 330-1 from step 320, in response to the second IG 230-2 identifying the presence of the ID (which effectively notifies the second ACM 110-2 that the first audio is effectively machine-generated), the second IG notifies the second MNLTG of the presence of the ID. In response, the second MNLTG 240-2 processes the first received text so as to generate a first machine response, which is a textual response generated for efficient and effective direct machine-to-machine communication (as opposed to machine-to-human communication) with the first ACM 110-1 (and specifically with the first MNLTG 240-1). For example, the first machine response is a machine-readable response or a prompt for the first MNLTG 240-1 to generate said response.

The second MNLTG 240-2 then communicates the first machine response directly to the second I/O 220-2, bypassing the second AP 210-2. Accordingly, the processing load upon the second ACM 110-2, and specifically by the second AP (and still more specifically by the second MTtSS 270-2) is reduced, and a risk of communication error may also be reduced).

The first machine response is then communicated by the second I/O 220-2 over the communication link 130 as text (rather than as audio data); this has the further benefit of reducing bandwidth demand and transport error.

In a second outcome 330-2 from step 320, in response to the second IG 230-2 identifying an absence of the ID, the IG notifies the second MNLTG 240-2 of such. In response, the second MNLTG 240-2 processes the first received text so as to generate a first human response, which is a textual response generated for machine-to-human communication (as opposed to machine-to-machine communication). The first human response is subsequently communicated from the second MNLTG 240-2 to the second MTtSS 270-2, which subsequently converts the first human response into second speech, which is then output by the second AP 210-2 as second audio to the second I/O 220-2 for onward communication to the first ACM 110-1 via the communication link 130. In a specific example, the second audio comprises speech of a responsive call salutation and an answer to the conversation initiator (*e.g. "Of course, please may I have your order number and name?*")*.*

After steps 330-1 and 330-2, the process 300 is available to re-iterate to step 310 to enable back- and-forth communication between the first ACM 110-1 and the second ACM 110-2 *(i.e.* with the nominal first ACM and second ACM switching places with each iteration) using machine-readable or human-readable responses, depending upon detection of the ID.

### Alternatives and Modifications

In an alternative, in response to the second ACM 110-2 identifying the ID (as per step 330-1), the second ACM (and specifically the second NC 250-2, as instructed by the second AP 210-2) is configured to offer, initiate or establish an alternative communication link to the communication link 130, in which said alternative communication link is a text-only communication link (e.g. SMS, WebRTC, *etc*.). The alternative communication link is available to use at least one different physical, data link, network, transport, session, presentation or application layer link to the communication link. The communication link 130 is then available to be closed, or is available to be maintained for dual-mode communication *(i.e.* human audio and machine text communication); this may be appropriate where there is also human a participant of observer. To aid this process, the ID is available to encode a communication configuration (*e.g.* network configuration, such as an address and/or access credentials, or an API request) for establishing the alternative communication link. Furthermore, the alternative communication link provides an asynchronous communication session, whereas the communication link provides a synchronous communication session, or vice versa.

As step 330-2, the second audio is generated with or without an ID from the second IG 230-2.

In one embodiment, the system and/or its components or subsystems can include computing devices, microprocessors, modules and other computer or computing devices, which can be any programmable device that accepts digital data as input, is configured to process the input according to instructions or algorithms, and provides results as outputs. In one embodiment, computing and other such devices discussed herein can be, comprise, contain or be coupled to a Central Processing Unit (CPU) configured to carry out the instructions of a computer program. Computing and other such devices discussed herein are therefore configured to perform basic arithmetical, logical, and input/output operations.

Computing and other devices discussed herein can include memory. Memory can comprise volatile or non-volatile memory as required by the coupled computing device or processor to not only provide space to execute the instructions or algorithms, but to provide the space to store the instructions themselves. In one embodiment, volatile memory can include random access memory (RAM), dynamic random access memory (DRAM), or static random access memory (SRAM), for example. In one embodiment, non-volatile memory can include read-only memory, flash memory, ferroelectric RAM, hard disk, floppy disk, magnetic tape, or optical disc storage, for example. The foregoing lists in no way limit the type of memory that can be used, as these embodiments are given only by way of example and are not intended to limit the scope of the disclosure.

In one embodiment, the system or components thereof can comprise or include various modules or engines, each of which is constructed, programmed, configured, or otherwise adapted to autonomously carry out a function or set of functions. The term "engine" as used herein is defined as a real-world device, component, or arrangement of components implemented using hardware, such as by an application specific integrated circuit (ASIC) or field programmable gate array (FPGA), for example, or as a combination of hardware and software, such as by a microprocessor system and a set of program instructions that adapt the engine to implement the particular functionality, which (while being executed) transform the microprocessor system into a special-purpose device. An engine can also be implemented as a combination of the two, with certain functions facilitated by hardware alone, and other functions facilitated by a combination of hardware and software. In certain implementations, at least a portion, and in some cases, all, of an engine can be executed on the processor(s) of one or more computing platforms that are made up of hardware (e.g., one or more processors, data storage devices such as memory or drive storage, input/output facilities such as network interface devices, video devices, keyboard, mouse or touchscreen devices, etc.) that execute an operating system, system programs, and application programs, while also implementing the engine using multitasking, multithreading, distributed (e.g., cluster, peer-peer, cloud, etc.) processing where appropriate, or other such techniques. Accordingly, each engine can be realized in a variety of physically realizable configurations, and should generally not be limited to any particular implementation exemplified herein, unless such limitations are expressly called out. In addition, an engine can itself be composed of more than one sub-engines, each of which can be regarded as an engine in its own right. Moreover, in the embodiments described herein, each of the various engines corresponds to a defined autonomous functionality; however, it should be understood that in other contemplated embodiments, each functionality can be distributed to more than one engine. Likewise, in other contemplated embodiments, multiple defined functionalities may be implemented by a single engine that performs those multiple functions, possibly alongside other functions, or distributed differently among a set of engines than specifically illustrated in the examples herein.

Various embodiments of systems, devices, and methods have been described herein. These embodiments are given only by way of example and are not intended to limit the scope of the claimed inventions. It should be appreciated, moreover, that the various features of the embodiments that have been described may be combined in various ways to produce numerous additional embodiments. Moreover, while various materials, dimensions, shapes, configurations and locations, etc. have been described for use with disclosed embodiments, others besides those disclosed may be utilized without exceeding the scope of the claimed inventions.

Persons of ordinary skill in the relevant arts will recognise that embodiments may comprise fewer features than illustrated in any individual embodiment described above. The embodiments described herein are not meant to be an exhaustive presentation of the ways in which the various features may be combined. Accordingly, the embodiments are not mutually exclusive combinations of features; rather, embodiments can comprise a combination of different individual features selected from different individual embodiments, as understood by persons of ordinary skill in the art. Moreover, elements described with respect to one embodiment can be implemented in other embodiments even when not described in such embodiments unless otherwise noted. Although a dependent claim may refer in the claims to a specific combination with one or more other claims, other embodiments can also include a combination of the dependent claim with the subject matter of each other dependent claim or a combination of one or more features with other dependent or independent claims. Such combinations are proposed herein unless it is stated that a specific combination is not intended. Furthermore, it is intended also to include features of a claim in any other independent claim even if this claim is not directly made dependent to the independent claim.

Moreover, reference in the specification to "one embodiment," "an embodiment," or "some embodiments" means that a particular feature, structure, or characteristic, described in connection with the embodiment, is included in at least one embodiment of the teaching. The appearances of the phrase "in one embodiment" in various places in the specification are not necessarily all referring to the same embodiment.

Any incorporation by reference of documents above is limited such that no subject matter is incorporated that is contrary to the explicit disclosure herein. Any incorporation by reference of documents above is further limited such that no claims included in the documents are incorporated by reference herein. Any incorporation by reference of documents above is yet further limited such that any definitions provided in the documents are not incorporated by reference herein unless expressly included herein.

Each feature disclosed herein, and (where appropriate) as part of the claims and drawings may be provided independently or in any appropriate combination.

Any reference numerals appearing in the claims are for illustration only and shall not limit the scope of the claims.

## Claims

1. A method for operating a computer system, said computer system comprising a:
first Audio Communication Machine, ACM; and
second ACM that is communicatively connected to the second ACM via a telecommunications network over a first communication link; and
wherein the first ACM and the second ACM each respectively comprise a first and a second:
Machine Natural Language Text Generator, MNLTG;
audio processor, including a:
Machine Speech-to-Text Processor, MStTP, for converting speech into text;
Machine Text-to-Speech Synthesiser, MTtSS, for converting text generated by the MNLTG into speech; and
Identifier Generator, IG, for generating an identifier, ID, denoting machine-generated communications; and
wherein the method comprises the steps of:
generating, at the first ACM:
an ID, using the first IG;
first text, using the first MNLTG;
first speech, from said generated first text and using the first MTtSS; and
audio data comprising the generated first speech and the ID;
communicating, from the first ACM to the second ACM, via the first communication link, the generated audio data;
receiving, at the second ACM, the communicated audio data;
identifying, using the second audio processor, the ID within the communicated audio data; and
in response to the second ACM identifying the ID, the second ACM communicating, to the first ACM, a textual response, generated by the second MNLTG, to the first speech.

2. A method of operating a first Audio Communication Machine, ACM, for communicating with a second ACM, in which said ACMs are communicatively connected via a telecommunications network over a first communication link, wherein the first ACM comprises a first:
Machine Natural Language Text Generator, MNLTG;
audio processor, including a first:
Machine Speech-to-Text Processor, MStTP, for converting speech into text;
Machine Text-to-Speech Synthesiser, MTtSS, for converting text generated by the MNLTG into speech; and
Identifier Generator, IG, for generating an identifier, ID, denoting machine-generated communications; and
wherein the method comprises the steps of:
generating, at the first ACM:
an ID, using the first IG;
first text, using the first MNLTG;
first speech, from said generated first text and using the first MTtSS; and
audio data comprising the generated first speech and the ID;
communicating, from the first ACM to the second ACM, via the first communication link, the generated audio data thereby to permit the second ACM, in response to receiving the audio data, to identify the ID within the communicated audio data and, in response to the second ACM identifying the ID, to communicate, to the first ACM, a textual response to the first speech.

3. A method of operating a second Audio Communication Machine, ACM, for communicating with a first ACM, in which said ACMs are communicatively connected via a telecommunications network over a first communication link, wherein the second ACM comprises a second:
Machine Natural Language Text Generator, MNLTG;
audio processor, including a second:
Machine Speech-to-Text Processor, MStTP, for converting speech into text; and
Machine Text-to-Speech Synthesiser, MTtSS, for converting text generated by the MNLTG into speech;
wherein the method comprises the steps of:
receiving, at the second ACM, from the first ACM, via the first communication link, audio data comprising first speech generated by the first ACM based on first text generated by the first ACM, and an ID for denoting machine-generated communications;
identifying, using the second audio processor, the ID within the communicated audio data; and
in response to identifying the ID, communicating, to the first ACM, a textual response, generated by the second MNLTG, to the first speech.

4. A method according to any preceding claim, wherein the textual response is communicated from the second ACM to the first ACM via the first communication link or via a second communication link that is different to the first communication link.

5. A method according to any preceding claim, wherein the ID is configured to encode:
the first text;
a configuration from which the first text is generated by the first ACM; and/or a network address to a network location storing:
the first text; and/or
said configuration; and
further comprising the step of the first ACM generating the textual response from the first text as retrieved, and/or as generated, using the ID.

6. A method according to any preceding claim, further comprising the step of, in response to the second ACM identifying the ID, the second ACM preventing generation and/or communication by the second ACM of an audio response to the received first speech.

7. A method according to any preceding claim, further comprising the step of, in response to the first ACM receiving the textual response from the second ACM, the first ACM communicating a further textual response to the textual response from the second ACM.

8. A computer-readable carrier medium comprising a computer program, which, when the computer program is executed by a computer, causes the computer to carry out the steps of any one of the preceding claims.

9. A computer system comprising a:
first Audio Communication Machine, ACM; and
second ACM that is communicatively connected to the second ACM via a telecommunications network over a first communication link; and
wherein the first ACM and the second ACM each respectively comprise a first and a second:
Machine Natural Language Text Generator, MNLTG;
audio processor, including a:
Machine Speech-to-Text Processor, MStTP, for converting speech into text;
Machine Text-to-Speech Synthesiser, MTtSS, for converting text generated by the MNLTG into speech; and
Identifier Generator, IG, for generating an identifier, ID, denoting machine-generated communications; and
wherein the first ACM is configured to:
generate:
an ID, using the first IG;
first text, using the first MNLTG;
first speech, from said generated first text and using the first MTtSS; and
audio data comprising the generated first speech and the ID;
communicate, from the first ACM to the second ACM, via the first communication link, the generated audio data; and
wherein the second ACM is configured to:
receive the communicated audio data;
identify, using the second audio processor, the ID within the communicated audio data; and
in response to the second ACM identifying the ID, communicate, to the first ACM, a textual response, generated by the second MNLTG, to the first speech.

10. A first Audio Communication Machine, ACM, for communicating with a second ACM, in which said ACMs are communicatively connected via a telecommunications network over a first communication link, wherein the first ACM comprises a first:
Machine Natural Language Text Generator, MNLTG;
audio processor, including a first:
Machine Speech-to-Text Processor, MStTP, for converting speech into text;
Machine Text-to-Speech Synthesiser, MTtSS, for converting text generated by the MNLTG into speech; and
Identifier Generator, IG, for generating an identifier, ID, denoting machine-generated communications; and
wherein the first ACM is configured to:
generate:
an ID, using the first IG;
first text, using the first MNLTG;
first speech, from said generated first text and using the first MTtSS; and
audio data comprising the generated first speech and the ID;
communicate, to the second ACM, via the first communication link, the generated audio data thereby to permit the second ACM, in response to receiving the audio data, to identify the ID within the communicated audio data and, in response to the second ACM identifying the ID, to communicate, to the first ACM, a textual response to the first speech.

11. A second Audio Communication Machine, ACM, for communicating with a first ACM, in which said ACMs are communicatively connected via a telecommunications network over a first communication link, wherein the second ACM comprises a second:
Machine Natural Language Text Generator, MNLTG;
audio processor, including a second:
Machine Speech-to-Text Processor, MStTP, for converting speech into text; and
Machine Text-to-Speech Synthesiser, MTtSS, for converting text generated by the MNLTG into speech;
wherein the second ACM is configured to:
receive, from the first ACM, via the first communication link, audio data comprising first speech generated by the first ACM based on first text generated by the first ACM, and an ID for denoting machine-generated communications;
identify, using the second audio processor, the ID within the communicated audio data; and
in response to identifying the ID, communicate, to the first ACM, a textual response, generated by the second MNLTG, to the first speech.
